(19) **Europäisches Patentamt / European Patent Office / Office européen des brevets**

(11) **EP 3 778 275 A1**

(12) **EUROPEAN PATENT APPLICATION**
published in accordance with Art. 153(4) EPC

(43) Date of publication:
**17.02.2021 Bulletin 2021/07**

(21) Application number: **19775700.8**

(22) Date of filing: **26.03.2019**

(51) Int Cl.:
**B60J 1/00** *(2006.01)*     **B32B 17/00** *(2006.01)*

(86) International application number:
**PCT/JP2019/012632**

(87) International publication number:
**WO 2019/189042 (03.10.2019 Gazette 2019/40)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **27.03.2018 JP 2018060961**
           **27.06.2018 JP 2018121902**

(71) Applicant: **NIPPON SHEET GLASS COMPANY, LIMITED**
**Tokyo 108-6321 (JP)**

(72) Inventors:
• **ASAI, Takahiro**
   **Tokyo 1086321 (JP)**
• **FUJINO, Kazuya**
   **Tokyo 108-6321 (JP)**

(74) Representative: **Mewburn Ellis LLP**
**Aurora Building**
**Counterslip**
**Bristol BS1 6BX (GB)**

(54) **VEHICLE WINDOW GLASS AND METHOD FOR MANUFACTURING SAME**

(57)    A vehicle window glass according to the present invention includes a glass body having at least one glass plate and a film region that is stacked on a surface of the at least one glass plate, and is formed by a conductive film having a surface resistance value of 11 to 15 $\Omega/\square$.

Fig. 5

Printed by Jouve, 75001 PARIS (FR)

EP 3 778 275 A1

## Description

Technical Field

The present invention relates to a vehicle window glass and a method for manufacturing the same.

Background Art

The engine in a gasoline-powered vehicle (gasoline vehicle hereinafter) serves as a heat source, and this heat source can be used to supply heat to the inside of the vehicle when an air conditioner is used. In contrast, an electric vehicle has no engine serving as a heat source, and thus a battery, which is a power source of the vehicle, needs to be used to supply heat to the inside of the vehicle. However, there is a problem in that the cruising distance will be affected if a battery is used for purposes other than traveling.

Thus, electric vehicles need to keep heat generated inside the vehicle from being released to the outside, even more so than conventional gasoline vehicles. In view of this, studies have been conducted on the use of heat blocking glass (Low-E glass) as a window glass for an electric vehicle. Usually, a metal film is formed on almost the entire surface of Low-E glass, and thus Low-E glass blocks heat by reflecting heat rays. However, there is a problem in that the radio wave transmittance will decrease due to the influence of this metal film because this metal film is a conductive film. Modern vehicles need to be capable of transmitting various radio waves for communication between radios, televisions, mobile phones, vehicles, and the ground, for example.

To address this, Patent Literature 1 discloses a technique for improving radio wave transmission properties by removing a portion of a metal film in a linear shape.

Citation List

Patent Literature

Patent Literature 1: Japanese Patent No. 6113291

Summary of Invention

Technical Problem

However, Low-E glass has insufficient radio wave transmission performance, and there is demand for further improvement in Low-E glass. Note that, although such issues may arise mainly in electric vehicles, such issues may arise in vehicles general because it is expected that Low-E glass will also be used in gasoline vehicles. The present invention has been made to resolve the above-described issues, and aims to provide a vehicle window glass in which a metal film is stacked, that has heat blocking performance, and by which radio wave transmission performance can also be improved, and to provide a method for manufacturing the same.

Solution to Problem

Aspect 1. A vehicle window glass including:

a glass body having at least one glass plate; and
a film region that is stacked on a surface of the at least one glass plate, and is formed by a conductive film having a surface resistance value of 11 to 15 $\Omega/\square$.

Aspect 2. The vehicle window glass according to Aspect 1,
in which the film region is provided with at least one first removal region that is formed by a closed line and where the conductive film is not stacked.

Aspect 3. The vehicle window glass according to Aspect 2,
in which, when a wavelength shortening ratio of the first removal region is $\alpha$, the first removal region has a rectangular shape having one side of $50 \times \alpha$ (mm) or more.

Aspect 4. The vehicle window glass according to Aspect 3,
in which, when a length of the entire circumference of the first removal region is L1 (mm), $L1 \geq 200 \times \alpha$ is satisfied.

Aspect 5. The vehicle window glass according to Aspect 1,
in which the film region is provided with at least one first removal region that is formed by a discontinuous line having at least one open portion and where the conductive film is not stacked.

Aspect 6. The vehicle window glass according to any of Aspects 2 to 5,
in which a second removal region where the conductive film is not stacked along the first removal region is formed on an inner side of the first removal region, and
a region formed by the conductive film is formed between the first removal region and the second removal region.

Aspect 7. The vehicle window glass according to Aspect 6,
in which a third removal region where the conductive film is not stacked along the second removal region is formed on an inner side of the second removal region, and
a region formed by the conductive film is formed between the second removal region and the third removal region.

Aspect 8. The vehicle window glass according to Aspect 7,
in which, when, in any two of the first to third removal regions, a length of the removal region having a longer total length is L2 and a length of the removal region having a shorter total length is L3, $L2 \geq 1.5 \times L3$ is satisfied.

Aspect 9. The vehicle window glass according to any of Aspects 2 to 8,
in which at least one fourth removal region where the conductive film is not stacked is formed on an outer side of a plurality of the first removal regions, the at least one fourth removal region being formed by a closed line disposed to surround the plurality of first removal regions.

Aspect 10. The vehicle window glass according to any of Aspects 1 to 9,
in which the conductive film is formed using a CVD method.

Aspect 11. The vehicle window glass according to any of Aspects 1 to 10,
in which the conductive film is a conductive film that meets all of the required qualities of Class A and Class B in all items of light resistance, abrasion resistance, acid resistance, and alkali resistance specified in JIS R3221: 2002.

Aspect 12. The vehicle window glass according to any of Aspects 1 to 11,
in which the conductive film is stacked on a surface of the glass body on a vehicle inner side.

Aspect 13. The vehicle window glass according to any of Aspects 1 to 11,
in which the glass body includes:

    an outer glass plate,
    an inner glass plate, and
    an intermediate film disposed between the outer glass plate and the inner glass plate, and
    the conductive film is stacked on at least one of a surface of the outer glass plate on a vehicle inner side and
    a surface of the inner glass plate on a vehicle outer side.

Aspect 14. The vehicle window glass according to Aspect 13,
in which the conductive film is stacked on both the surface of the outer glass plate on the vehicle inner side and the surface of the inner glass plate on the vehicle outer side.

Aspect 15. The vehicle window glass according to any of Aspects 2 to 14,
in which the vehicle window glass allows the transmission of radio waves having a frequency of X ($X \geq 0.7 \times 10^9$ Hz) by -24 dB or more.

Aspect 16. The vehicle window glass according to Aspect 15,
in which, when a wavelength shortening ratio of the glass plate is $\alpha$, the speed of light is c (mm/s), and a length of the entire circumference of the first removal region is L1 (mm), $L1 \geq \lambda \times \alpha$ (where $\lambda$ (mm) = c/X) is satisfied.

Aspect 17. The vehicle window glass according to Aspect 16,
in which the first removal region has a rectangular shape and is formed by a discontinuous line having at least one open portion, and
the open portion has a length of $\lambda \times \alpha$ or more.

Aspect 18. A method for manufacturing a vehicle window glass, the method including:

    a step of stacking, on a surface of a glass plate, a film region formed by a conductive film having a surface resistance value of 11 to 15 $\Omega/\square$ in a float method that is used to manufacture the glass plate; and
    a step of forming at least one removal region where the conductive film has been removed from a portion of the film region.

Aspect 19. The method for manufacturing a vehicle window glass according to Aspect 18,
wherein the film region is formed on a surface of the glass plate that faces a vehicle inner side.

Aspect 20. The method for manufacturing a vehicle window glass according to Aspect 18, the method further including a step of forming a laminated glass in which an intermediate film is disposed between an outer glass plate and an inner glass plate,

in which at least one of the outer glass plate and the inner glass plate is a glass plate on which the film region is stacked.

Aspect 21. The method for manufacturing a vehicle window glass according to Aspect 20,

in which the inner glass plate is a glass plate on which the film region is stacked, and the film region is stacked on a surface of the inner glass plate on a vehicle inner side.

Aspect 22. The method for manufacturing a vehicle window glass according to Aspect 20,

in which the outer glass plate and the inner glass plate are each a glass plate on which the film region is stacked, and the film region is stacked on a surface of the outer glass plate on a vehicle inner side and a surface of the inner glass plate on the vehicle inner side.

Aspect 23. The method for manufacturing a vehicle window glass according to any of Aspects 18 to 24,

in which the removal region is constituted by a closed line.

Aspect 24. The method for manufacturing a vehicle window glass according to any of Aspects 18 to 22,

in which the removal region is constituted by a discontinuous line having at least one open portion.

Aspect 25. The method for manufacturing a vehicle window glass according to any of Aspects 18 to 24,

in which, in the step of forming the removal region, the conductive film is removed through irradiation with a laser.

Aspect 26. The method for manufacturing a vehicle window glass according to Aspect 25,

in which the laser is selected from an infrared laser, a green laser, and an ultraviolet laser.

Aspect 27. The method for manufacturing a vehicle window glass according to Aspect 25,

in which the laser is an infrared laser.

Advantageous Effects of Invention

According to the present invention, a vehicle window glass in which a metal film is stacked has heat blocking performance, and radio wave transmission performance can be improved.

Brief Description of Drawings

FIG. 1 is a front view of one embodiment in which a window glass according to the present invention is used in a windshield.
FIG. 2 is a cross-sectional view of FIG. 1.
FIG. 3 is a plan view showing an example of removal regions.
FIG. 4 is a plan view showing an example of removal regions.
FIG. 5 is a plan view showing an example of removal regions.
FIG. 6 is a plan view showing an example of removal regions.
FIG. 7 is a plan view showing an example of removal regions.
FIG. 8 is a plan view showing an example of removal regions.
FIG. 9 is a plan view showing an example of removal regions.
FIG. 10 is a plan view showing an example of removal regions.
FIG. 11A is a plan view showing another example of removal regions.
FIG. 11B is a plan view showing another example of removal regions.
FIG. 11C is a plan view showing another example of removal regions.
FIG. 11D is a plan view showing another example of a windshield.
FIG. 12 is a plan view showing removal regions of Example 2.
FIG. 13 is a graph showing radio wave transmission performance in Examples 1 and 2, and a comparative example.
FIG. 14 is a plan view showing removal regions of Examples 3 to 23.
FIG. 15 is a graph showing radio wave transmission performance in Examples 3 to 5.
FIG. 16 is a graph showing radio wave transmission performance in Examples 6 to 10.
FIG. 17 is a graph showing radio wave transmission performance in Examples 11 to 16.
FIG. 18 is a graph showing radio wave transmission performance in Examples 17 to 23.
FIG. 19 is a plan view showing removal regions of Examples 24 to 26.
FIG. 20 is a graph showing radio wave transmission performance in Examples 24 to 26.
FIG. 21 is a plan view showing removal regions of Examples 27 to 30.
FIG. 22 is a plan view showing removal regions of Examples 31 to 34.
FIG. 23 is a graph showing radio wave transmission performance in Examples 27 to 34.
FIG. 24 is a plan view showing removal regions of Examples 35 and 36.
FIG. 25 is a graph showing radio wave transmission performance in Examples 35 and 36.

FIG. 26 is a plan view showing removal regions of Example 37.

FIG. 27 is a graph showing radio wave transmission performance in Examples 37 to 39.

Description of Embodiments

The following describes one embodiment in which a vehicle window glass according to the present invention is used in a windshield with reference to the drawings. The windshield according to this embodiment includes a laminated glass (glass body) 1 and a conductive film 2 stacked on the laminated glass 1. The following describes this windshield in detail.

1. Laminated glass

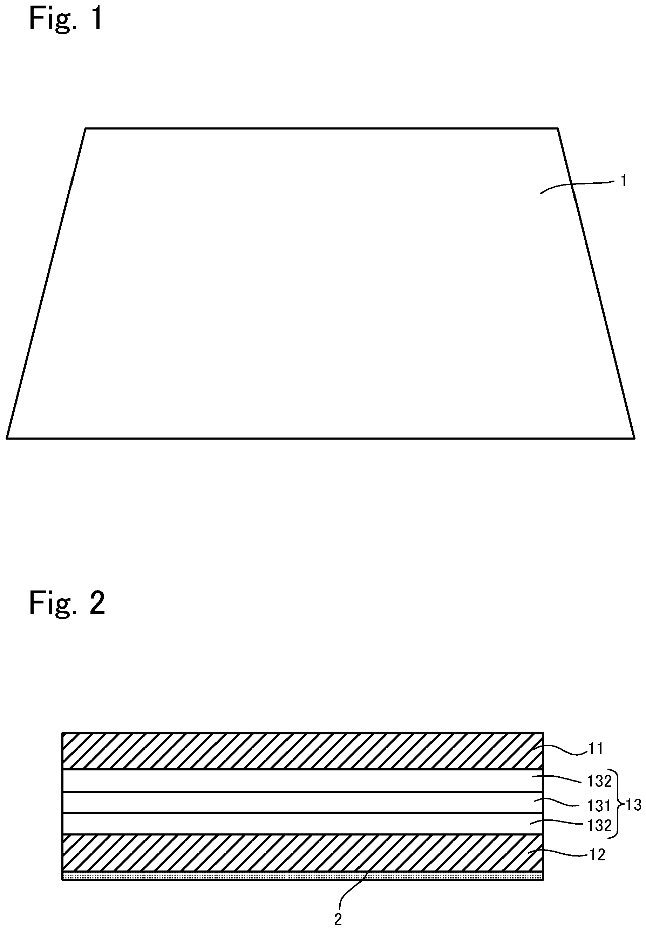

FIG. 1 is a plan view of a laminated glass, and FIG. 2 is a cross-sectional view of FIG. 1. As shown in FIGS. 1 and 2, the laminated glass 1 according to this embodiment includes an outer glass plate 11, an inner glass plate 12, and a resin intermediate film 13 disposed between the glass plates 11 and 12. Note that, although the conductive film 2 is formed on the inner glass plate 12 in FIG. 2, this is an example. The following describes these glass plates.

1-1. Outer glass plate and inner glass plate

Known glass plates can be used as the outer glass plate 11 and the inner glass plate 12, and the outer glass plate 11 and the inner glass plate 12 can also be formed using heat absorbing glass, common clear glass, common green glass, or UV green glass. However, if this laminated glass 1 is used in an automobile window glass, the laminated glass 1 needs to realize a visible light transmittance with safety standards of the country in which the automobile will be used. Adjustments can be made such that required solar absorptivity is ensured by the outer glass plate 11, and visible light transmittance meets safety standards due to the inner glass plate 12, for example. The following describes an example of the composition of clear glass, and an example of the composition of heat absorbing glass.

Clear glass

$SiO_2$: 70 to 73 mass%
$Al_2O_3$: 0.6 to 2.4 mass%
CaO: 7 to 12 mass%
MgO: 1.0 to 4.5 mass%
$R_2O$: 13 to 15 mass% (R represents an alkali metal)
Total iron oxide in terms of $Fe_2O_3$ (T-$Fe_2O_3$) : 0.08 to 0.14 mass%

Heat absorbing glass

The composition of heat absorbing glass can, for example, be given as a composition, based on the composition of clear glass, including total iron oxide in terms of $Fe_2O_3$ (T-$Fe_2O_3$) at a ratio of 0.4 to 1.3 mass%, $CeO_2$ at a ratio of 0 to 2 mass%, and $TiO_2$ at a ratio of 0 to 0.5 mass%, and in which the skeletal component (mainly $SiO_2$ or $Al_2O_3$) of the glass is reduced by an amount equivalent to the increase in T-$Fe_2O_3$, $CeO_2$, and $TiO_2$.

The outer glass plate 11 is mainly required to have durability and impact resistance against external interference, and if this laminated glass 1 is used as a windshield of an automobile, for example, the outer glass plate 11 needs to have impact resistance against flying objects such as pebbles. From this point of view, the thickness of the outer glass plate 11 is preferably 1.8 mm or more, 1.9 mm or more, 2.0 mm or more, 2.1 mm or more, and 2.2 mm or more in the stated order. On the other hand, the upper limit of the thickness of the outer glass plate 11 is preferably 5.0 mm or less, 4.0 mm or less, 3.1 mm or less, 2.5 mm or less, and 2.4 mm or less in the stated order. In particular, the upper limit thereof is more than 2.1 mm and 2.5 mm or less, and particularly preferably 2.2 mm to 2.4 mm inclusive.

On the other hand, it is preferable to make the thickness of the inner glass plate 12 smaller than that of the outer glass plate 11 in order to reduce the weight of the laminated glass 1. Specifically, the thickness of the inner glass plate 12 is preferably 0.6 mm or more, 0.8 mm or more, 1.0 mm or more, and 1.3 or more in the stated order. On the other hand, the upper limit of the thickness of the inner glass plate 12 is preferably 1.8 mm or less, 1.6 mm or less, 1.4 mm or less, 1.3 mm or less, and less than 1.1 mm in the stated order. In particular, the upper limit thereof is preferably 0.6 mm or more and less than 1.1 mm, for example.

Also, the shapes of the outer glass plate 11 and the inner glass plate 12 according to this embodiment may be a planar shape or a curved shape. However, if glass has a curved shape, it is said that sound insulation performance will deteriorate when the amount of doubling increases. The "amount of doubling" refers to the amount indicating bending of a glass plate, and when a straight line connecting the center of an upper side of the glass plate and the center of a lower side thereof is set, for example, the maximum distance between the straight line and the glass plate is defined as the amount of doubling.

Here, an example of a method for measuring the thickness when the glass plate is curved will be described below. First, two measurement positions are respectively located in an upper portion and a lower portion on a centerline S extending in the up-down direction along the center of the glass plate located in the right-left direction. Although there is no particular limitation to a measuring device, it is possible to use a thickness gauge such as SM-112 manufactured by TECLOCK Corporation, for example. When measurement is performed, the glass plate is disposed such that a curved surface of the glass plate is placed on a flat surface, and measurement is performed with an end portion of the glass plate held by the thickness gauge. Note that, even if the glass plate is flat, it is possible to perform measurement in the same manner as if the glass plate is curved.

1-2. Intermediate film

The intermediate film 13 is formed of a plurality of layers, and as shown in FIG. 2, as an example, the intermediate film 13 can be constituted by three layers with a soft core layer 131 held by outer layers 132 that are harder than the core layer 131. However, there is no limitation to this configuration, and it is sufficient that the intermediate film 13 is formed of a plurality of layers including the soft core layer 131. The intermediate film 13 can also be formed of two layers (one core layer and one outer layer) including the core layer 131, an odd number of layers of 5 or more (one core layer and four outer layers) that are disposed with the core layer 131 located at the center, or an even number of layers including the core layer 131 on the inner side (one core layer and the others are outer layers), for example. Alternatively, the intermediate film 13 can also be constituted by one layer.

Although the core layer 131 can be made of a material that is softer than that of the outer layers 132, there is no limitation thereto. Also, although there is no particular limitation to the materials constituting the layers 131 and 132, the layers 131 and 132 can be made of materials with which the core layer is softer, for example. The outer layer 132 can be constituted by a polyvinyl butyral resin (PVB), for example. Polyvinyl butyral resin is preferable because polyvinyl butyral resin has good adhesiveness to the glass plates and penetration resistance. On the other hand, the core layer 131 can be constituted by an ethylene vinyl acetate resin (EVA), or a polyvinyl acetal resin that is softer than a polyvinyl butyral resin constituting the outer layer 132. Due to the soft core layer 131 being held therebetween, it is possible to significantly improve sound insulation performance while keeping adhesiveness and penetration resistance equivalent to those of a single resin intermediate film 3.

Also, the total thickness of the intermediate film 13 is not particularly prescribed, and is preferably 0.3 to 6.0 mm, more preferably 0.5 to 4.0 mm, and particularly preferably 0.6 to 2.0 mm. On the other hand, the thickness of the core layer 131 is preferably 0.1 to 2.0 mm, and more preferably 0.1 to 0.6 mm. If the thickness of the soft core layer 131 is smaller than 0.1 mm, the soft core layer 131 is less likely to have effects, and if the thickness thereof is larger than 2.0 mm or 0.6 mm, the total thickness increases, resulting in an increase in costs. On the other hand, the thickness of the outer layer 132 is, although not particularly limited, preferably 0.1 to 2.0 mm, and more preferably 0.1 to 1.0 mm, for example. In addition, it is also possible to keep the total thickness of the intermediate film 13 constant, and adjust the thickness of the core layer 131 within this range.

Note that the thickness of the intermediate film 13 need not be constant over the entire surface, and the intermediate film 13 may be wedge shaped for laminated glass used in a head up display, for example. In this case, the thickness of the intermediate film 13 is obtained by measuring a portion having the smallest thickness, that is, the lowermost portion of the laminated glass.

Although there is no particular limitation to the method for manufacturing the intermediate film 13, examples thereof include a method in which resin components such as the above-described polyvinyl acetal resin, a plasticizer, and other additives as required are mixed and kneaded evenly, and layers are then collectively subjected to extrusion molding, and a method of stacking these two or more resin films produced using the previous method through pressing, lamination, or the like. Resin films that have not been stacked and that are to be used in the method of stacking through pressing, lamination, or the like may have a single layer structure or multilayer structure.

2. Conductive film

2-1. Overview of conductive film

Next, the conductive film 2 will be described. The conductive film 2 is for making the laminated glass 1 low emissivity (Low-E) glass, and the conductive film 2 can be formed over the entire surface of the laminated glass 1. Note that, although the conductive film 2 can be formed on any surface of the laminated glass 1, the conductive film 2 can be formed on at least one of a surface of the outer glass plate 11 located on the vehicle inner side and a surface of the inner glass plate 12 located on the vehicle outer side, for example. Also, a region where the conductive film 2 is formed will be referred to as a "film region 20" hereinafter.

The conductive film 2 is made of a material having a surface resistance of 11 to 15 $\Omega/\square$. Surface resistance can be measured using Loresta IP manufactured by Mitsubishi Chemical Corporation.

A material for forming such a conductive film needs only contain at least one metal, and examples thereof include silver, molybdenum, tantalum, niobium, antimony, aluminum, or an alloy thereof, and/or at least one metal oxide layer, preferably tantalum-doped titanium oxide, tantalum-doped tin oxide, ITO (indium tin oxide), fluorine-doped tin oxide, antimony-doped tin oxide, niobium doped- titanium oxide, and aluminum-doped zinc oxide.

Also, the thickness of the conductive film 20 is, although not particularly limited, preferably 10 nm to 5 $\mu$m, and more preferably 30 nm to 1 $\mu$m, for example.

In addition, although there is no particular limitation to a method for forming a conductive film, it is possible to adopt a so-called physical vapor deposition method such as a sputtering method or a vacuum vapor deposition method, a spray method, or a chemical vapor deposition (CVD) method, for example. In particular, if a CVD method is adopted, it is preferable to adopt an online CVD method. The online CVD method is one type of chemical vapor deposition method in which, in a float glass manufacturing process, a material for a conductive film is supplied onto a glass ribbon placed on a molten tin bath and having a temperature of 615°C or higher, and a conductive film is formed through pyrolysis and oxidation reaction.

As described above, heat rays can be reflected by stacking the conductive film 2 on the laminated glass 1. Accordingly, it is possible to block heat and improve a thermally insulating effect inside the vehicle. However, because the transmittance of radio waves from the outside of the vehicle is reduced by the conductive film 2, due to various radio waves being prevented from passing through the laminated glass 1, communication failure may occur, such as various types of communication between radios, televisions, mobile phones, vehicles, and the ground.

In view of this, the inventor of the present invention found that, when the conductive film 2 having a surface resistance of 11 ○ 15 $\Omega/\square$ is stacked on the laminated glass 1, it is possible to inhibit a reduction in the radio wave transmission performance even if the conductive film 2 is stacked on the entire surface of the laminated glass 1. In particular, the inventor also found that, when the conductive film 2 is formed using the CVD method, the effect of inhibiting a reduction in the radio wave transmission performance is increased. Also, the inventor of the present invention found that, when removal regions as described below are formed in the film region 20, it is possible to further inhibit a reduction in the radio wave transmission performance. The following describes the removal regions.

2-2. Removal region

A removal region refers to a region obtained by removing the conductive film 2 from the film region 20, and may have various shapes, and examples thereof are as follows.

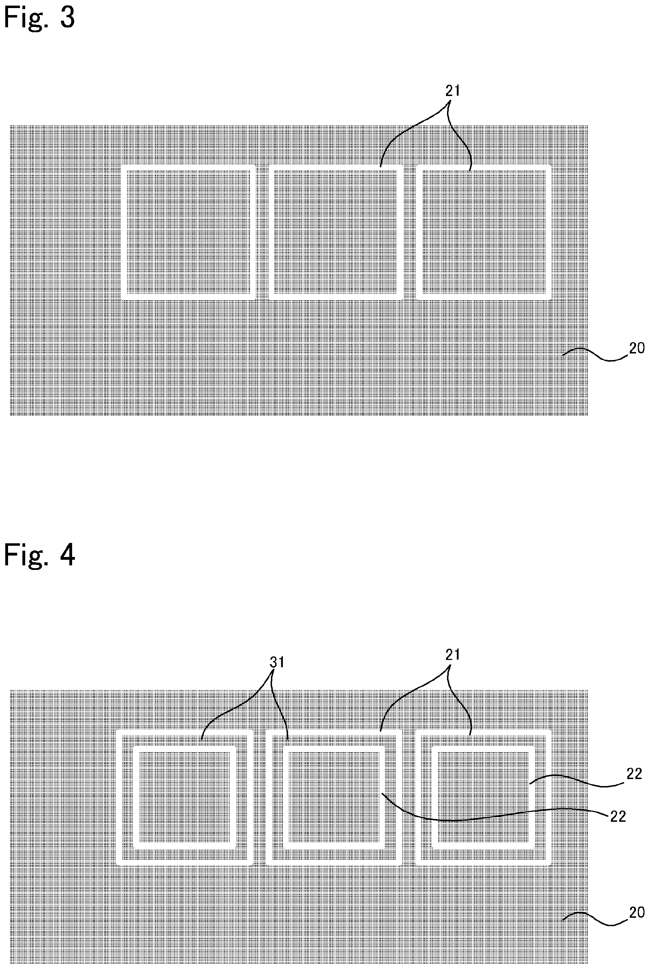

(1) As shown in FIG. 3, a plurality of first removal regions 21 each constituted by a rectangular closed line are formed in the film region 20. This first removal region 21 is a region where no conductive film 2 is stacked, and a rectangular conductive film is formed in each first removal region 21. Also, the plurality of first removal regions 21 are disposed with predetermined spaces therebetween.

(2) As shown in FIG. 4, the above-described plurality of first removal regions 21 are formed in the film region 20, and rectangular second removal regions 22 are respectively formed inside the first removal regions 21 with spaces therebetween. The second removal regions 22 are regions where no conductive film 2 is stacked which is formed by a rectangular closed line extending along the first removal region 21. That is, the first removal region 21 and the second removal region 22 are formed substantially concentrically. Accordingly, a rectangular and linear first conductive region 31 is formed between the first removal region 21 and the second removal region 22. Note that, although the first conductive region 31 is formed linearly because a gap between the first removal region 21 and the second removal region 22 is small in this example, if a gap between the removal regions 21 and 22 is large, the first conductive region 31 is not necessarily linear. The same applies to the other conductive regions, which will be described later.

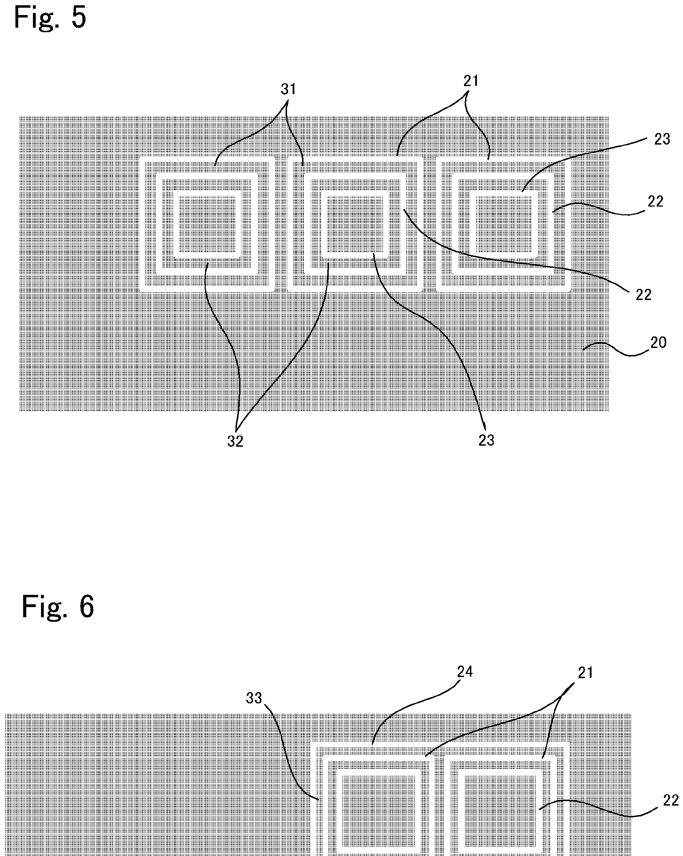

(3) As shown in FIG. 5, the above-described multiple first removal regions 21 and second removal regions 22 are formed in the film region 20, and rectangular third removal regions 23 are respectively formed inside the second removal regions 22 with spaces therebetween. The third removal regions 23 are regions where no conductive film 2 is stacked which is formed by a rectangular closed line extending along the second removal region 22. That is, the first to third removal regions 21 to 23 are formed substantially concentrically. Accordingly, a rectangular and linear second conductive region 32 is formed between the second removal region 22 and the third removal region 23, in addition to the above-described first conductive region 31.

(4) As shown in FIG. 6, the above-described multiple first removal regions 21 and second removal regions 22 are formed in the film region 20. Also, a rectangular fourth removal region 24 is formed outside the first removal regions 21 with a space provided surrounding the four first removal regions 21. The fourth removal region 24 is a region that is formed by a rectangular closed line and where no conductive film 2 is stacked. Accordingly, a rectangular and linear third conductive region 33 is formed between the first removal regions 21 and the fourth removal region 24.

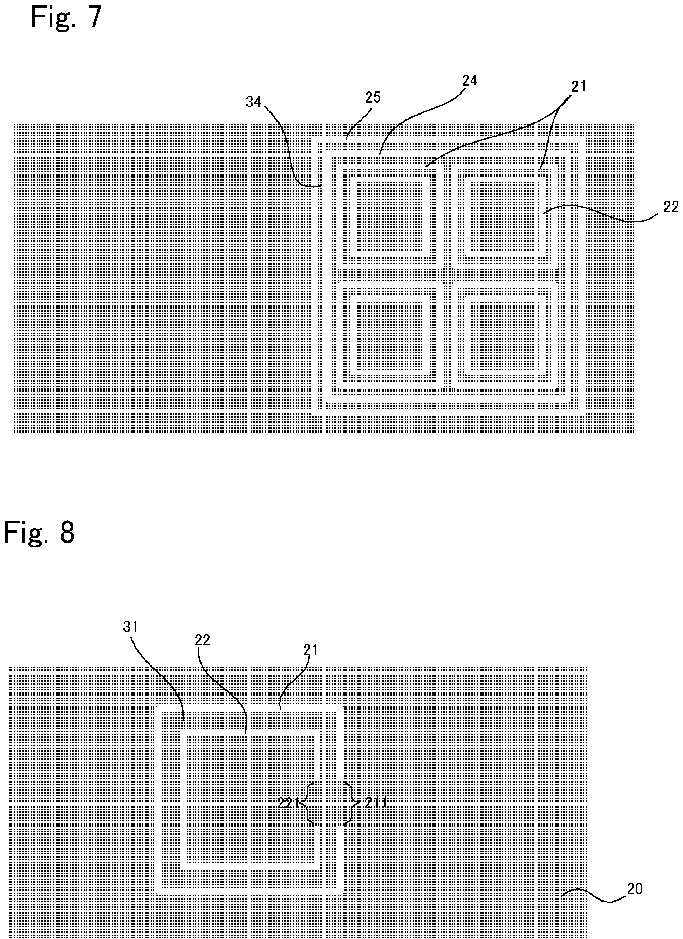

(5) As shown in FIG. 7, in the film region 20, a rectangular fifth removal region 25 is formed outside the above-described fourth removal region 24 with a space therebetween. The fifth removal region 25 is a region that is formed by a rectangular closed line and where no conductive film 2 is stacked. Accordingly, a rectangular and linear fourth conductive region 34 is formed between the fourth removal region 24 and the fifth removal region 25.

The above (1) to (5) are examples, and the removal regions 21 to 25 may have any shapes other than a rectangular shape, and may have a circular shape or a polygonal shape. Although three concentric removal regions 21 to 23 are formed in the example (3) shown in FIG. 5, it is also possible to form four or more concentric removal regions. Although the fourth removal region 24 is formed to surround the four first removal regions 21 in the example (4) shown in FIG. 6, there is no particular limitation to the number of first removal regions 21 to be surrounded, and it is sufficient that the fourth removal region 24 is formed to surround two or more first removal regions 21. Also, as shown in FIG. 7, it is also possible to provide a fifth removal region 25 for surrounding the fourth removal region 24, and there is no particular limitation to the number of concentric removal regions surrounding a plurality of removal regions (e.g., the first and second removal regions 21 and 22). Also, removal regions need not be strictly concentric, and may be slightly displaced from each other.

(6) Although the removal regions 21 to 25 in (1) to (5) above are formed by closed lines, it is also possible to form at least one open portion. That is, each of the removal regions 21 to 25 can also be formed by a discontinuous line having at least one open portion. Although the first and second removal regions 21 and 22 shown in FIG. 4 are shown in FIG. 8, for example, open portions 211 and 221 are formed in portions of the removal regions 21 and 22, that is, in the vicinity of the center of the right sides thereof. Accordingly, the first and second removal regions 21 and 22 form a partially opened region, that is, a C-shaped region.

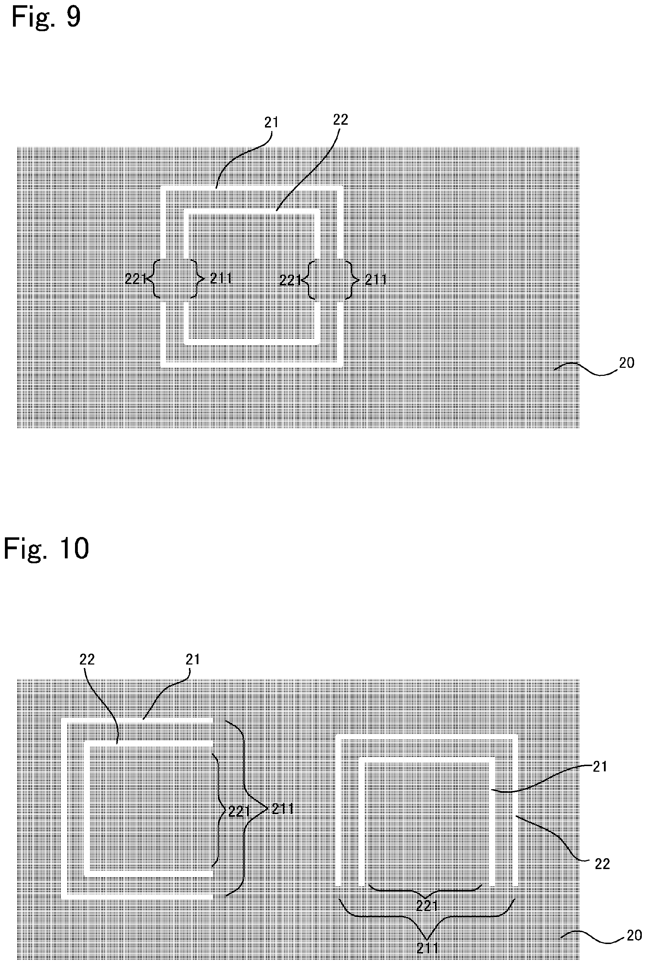

(7) The first and second removal regions 21 and 22 are shown in the example shown in FIG. 9, and portions 211 and 221 are formed in the vicinities of the centers of the right sides and the left sides thereof. Thus, the first and second removal regions 21 and 22 in this example have a rectangular shape overall due to U-shaped lines being disposed with predetermined spaces therebetween in the up-down direction.

(8) Although the first and second removal regions 21 and 22 are shown in the example shown in FIG. 10, open portions 211 and 221 are formed on the entire right sides thereof. Accordingly, the first and second removal regions 21 and 22 form a U-shaped region. Also, as shown on the left side in FIG. 10, portions that are open to the lower side (or the upper side) may be present.

Note that, although there are no particular limitations to the positions, number, and lengths of open portions 211 and 221, the total length of an open portion is preferably and substantially 25% or less the length of the closed line. Also, although the examples (6) to (8) are formed based on the first and second removal regions 21 and 22 shown in FIG. 4, it is also possible to provide an open portion in the other removal regions. Also, it is possible to combine the examples (1) to (8) as appropriate.

The amount of transmission attenuation of radio waves at a frequency X (Hz) of $0.7 \times 10^9$ Hz or more, in particular, can be increased by the removal regions 21 to 25 as described above, and it is preferable to allow the transmission of radio waves having the frequency X by -24 dB or more, for example.

In this case, it is preferable that the length L (mm) of the entire circumference of the first removal region satisfies $L1 \geq \lambda$ (where $\lambda$ (mm) = (c/X) is satisfied) (c (mm/s) represents the speed of light). Also, the length of the open portion 211 in the first removal region 21 is preferably more than or equal to $\lambda$ (mm), for example.

Also, when any of the first to fifth removal regions are provided and one of any two of the removal regions is disposed in an inner portion of the other removal region, if the relationship between these two removal regions satisfies Equation (A) below, the amount of transmission attenuation in a specific frequency range increases.

$$L2 \geq 1.5 \times L3 \quad (A)$$

where L2 represents the length of the removal region having a longer total length, out of the any two removal regions, and L3 represents the length of the removal region having a shorter total length, out of two removal regions. Note that, when an open portion is formed in a removal region, L2 and L3 each refer to the length of a figure obtained by fitting a removal region to the outside of a removal region and closing the removal regions.

The inventor of the present invention confirmed that, when this relationship is satisfied, the amount of transmission attenuation of radio waves in a low frequency range increases due to a removal region having a long total length, and the amount of transmission attenuation of radio waves in a high frequency range increases due to a removal region having a short total length.

Although there is no particular limitation to the line width of a removal region, the line width thereof is preferably 0.025 to 0.3 mm, and more preferably 0.03 to 0.14 mm, for example. Also, such a removal region can be obtained by linearly removing a conductive film by irradiating the film region with a laser beam, for example.

It is possible to use, as a laser beam, a laser that is generally used to cut or punch glass, such as an infrared laser, a green laser, an UV laser, or the like, for example. In particular, in order to remove only a film portion and leave a glass portion without removing the glass portion, an infrared laser is preferably used, and a YAG laser is particularly preferably used. Note that, if the line width of a removal region is excessively large, the difference in transmitted light between the removal region and an open portion is significantly large, and the removal region is likely to be visible. In view of this, in order to inhibit visual recognition of a removal region, it is preferable to make the line width of the removal region as thin as not affecting radio wave transmission. An appropriate removal region can be produced by concentrating a YAG laser with an output of 10 to 50 W, using a galvanometric optical system, and performing irradiation processing with a scanning speed of 200 mm/s to 1,000 mm/s, for example.

Also, it is known that, in the case of vehicle glass, from the relationship between the movement of the line of sight of a passenger and the glass angle, usually, in a case where there is a difference in transmitted light in the horizontal direction with respect to a vehicle (horizontal stripes), this difference is more visible than in a case where there is a difference in transmitted light in the vertical direction with respect to the vehicle (vertical stripes). In such respects, the effect of making removal regions less visible can also be expected by reducing removal regions in the horizontal direction with respect to the vehicle, that is, by providing many open portions described above in the horizontal direction with respect to the vehicle. Thus, it is preferable to provide removal regions as that shown on the right side in FIG. 10, for example.

Although the removal region can be formed at any positions of a windshield, it is preferable to form the removal regions in an upper portion of the windshield in consideration of the reception of radio waves.

3. Method for manufacturing windshield

There is no particular limitation to a method for manufacturing laminated glass according to this embodiment, and it is possible to adopt a conventionally known method for manufacturing laminated glass. First, the film region 20 is formed by stacking the conductive film 2 on at least one of the outer glass plate 11 and the inner glass plate 12, using the above-described CVD method (in particular, an online CVD method). Then, a removal region is formed by a laser as needed. The intermediate film 13 is then held between the outer glass plate 11 and the inner glass plate 12, and the resulting object is introduced into a rubber bag, and pre-bonded at about 70°C to 110°C while being sucked under reduced pressure. Other methods can also be used for pre-bonding. The intermediate film 13 is held between the outer glass plate 11 and the inner glass plate 12, and the resulting object is heated by an oven at 45°C to 65°C, for example. Then, this laminated glass 1 is pressed by a roller at 0.45 to 0.55 MPa. Then, the resulting laminated glass 1 is heated again by an oven at 80°C to 105°C, and is pressed again by a roller at 0.45 to 0.55 MPa. In this manner, pre-bonding is complete.

Main bonding is then performed. The pre-bonded laminated glass is subjected to main bonding using an autoclave at 8 to 15 atm and 100°C to 150°C. Specifically, main bonding can be performed under conditions at 14 atm and 145°C. A windshield according to this embodiment is manufactured in this manner.

4. Features

As described above, when the conductive film 2 having a surface resistance of 11 to 15 $\Omega/\square$ is stacked on the laminated glass 1, it is possible to ensure thermally insulating properties inside the vehicle due to a heat blocking effect. In particular, in electric vehicles, the use of air conditioners can be reduced, resulting an increase in the power saving effect. Also, such a conductive film 2 can inhibit a decrease in radio wave transmission performance even if the conductive film 2 is stacked on the entire surface of the laminated glass 1.

Also, it is possible to further inhibit a reduction in the radio wave transmission performance by forming the removal regions 21 to 25 in the film region 20. The rectangular first conductive region 31 is formed between the first removal region 21 and the second removal region 22, and it is conceivable that the first conductive region 31 functions as a loop antenna, for example. Thus, a reduction in radio wave transmission performance can also be inhibited by providing such removal regions while realizing heat blocking performance.

5. Variations

Although embodiments of the present invention have been described above, the present invention is not limited to the above-described embodiments, and various changes can be made without departing from the gist of the invention. Also, two or more of the following variations and the modes of the removal regions described in the above-described embodiments can be combined as appropriate.

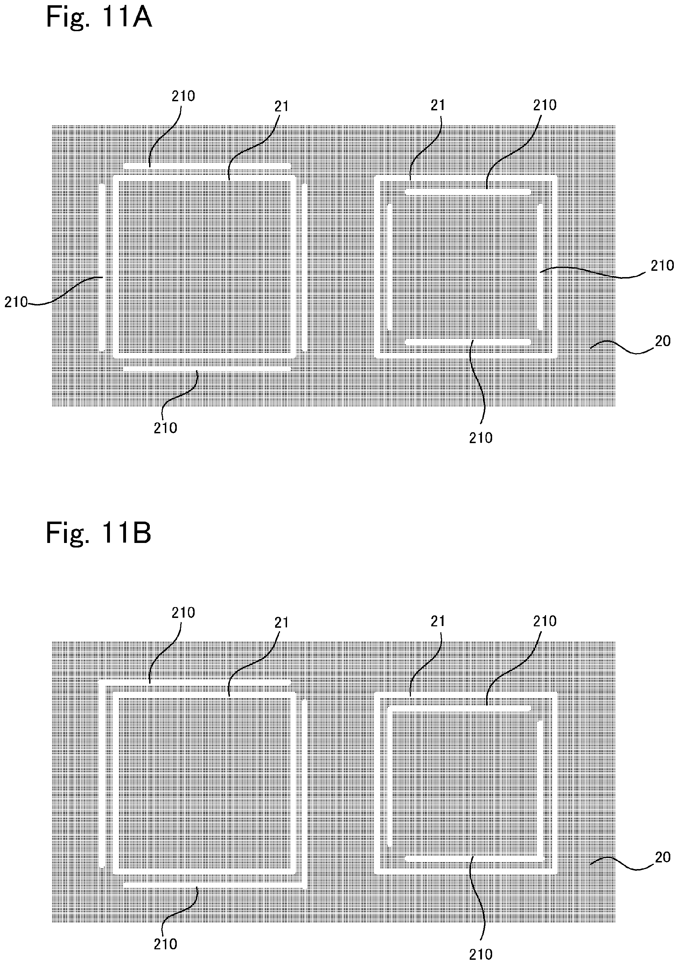

A removal region may have a form other than those of the above-described embodiments. As shown in the left side of FIG. 11A, it is also possible to provide a linear auxiliary removal region 210 on the outside of each side of the first removal region 21, for example. These four auxiliary removal regions 210 are not connected to each other. Similarly, as shown in the right side of FIG. 11A, it is also possible to provide a linear auxiliary removal region 210 on the inside of each side of the first removal region 21, for example. These four auxiliary removal regions 210 are not connected to each other. Note that the auxiliary removal region can also be disposed on both the inside and the outside of the first removal region. The inventor of the present invention confirmed that such auxiliary removal regions also contribute to an increase in the amount of transmission attenuation of radio waves. Note that the auxiliary removal region 210 need not be provided over substantially the total length of each side of the first removal region 21, and may also be provided over the length of a portion of the side. Also, as will be described later, it is also possible to provide the auxiliary removal region in the second to fifth removal regions 22 to 25.

FIG. 11B shows a mode in which adjacent auxiliary removal regions 210 are linked into an L-shape. That is, one first removal region 21 is provided with two auxiliary removal regions 210. Specifically, the auxiliary removal regions 210 are provided outside the first removal region 21 in the left side of FIG. 11B, and the auxiliary removal regions 210 are provided inside the first removal region 21 in the right side of FIG. 11B.

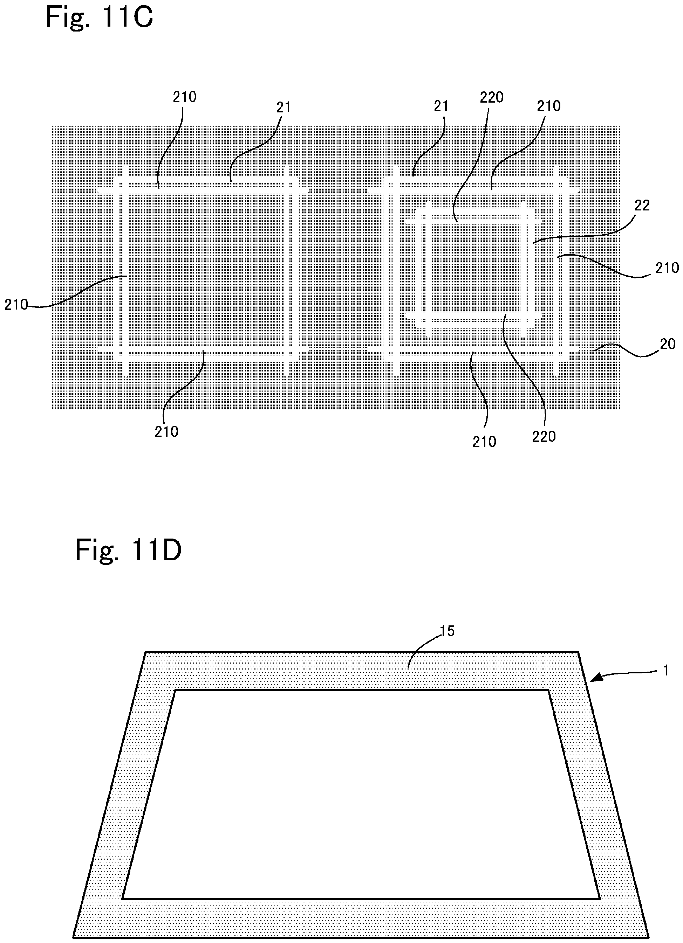

Four auxiliary removal regions 210 are provided inside the first removal region 21 in the left side of FIG. 11C, and end portions of the auxiliary removal regions 210 extend to the outside of the first removal region 21. In the right side of FIG. 11C, a second removal region 22 is further provided, and the second removal region 22 has internal auxiliary removal regions 220 that are similar to that of the first removal region 21. Note that the auxiliary removal regions 210 can be handled as normal removal regions in the example shown in FIG. 11C. That is, the total length of a closed figure formed by the four auxiliary removal regions 210 may be handled as a removal region, and the total length of this closed figure is L1, L2, or L3 described above.

As described above, the removal region may have various modes, and the above-described removal regions are examples, and various changes can be made.

As shown in FIG. 11D, a mask layer 15 can be formed at a circumferential edge portion of the windshield. This mask layer 15 blocks the field of view from the insider or outside of the vehicle, and can be formed of a material such as a dark ceramic material such as a black ceramic material, for example. The mask layer 15 can be formed on at least one surface of the outer glass plate 11 and the inner glass plate 12.

Although an example in which the vehicle window glass of the present invention is applied to the windshield has been described in the above-described embodiments, the vehicle window glass of the present invention can also be applied to a side glass, a rear glass, and the like. In this case, the film region 20 can be formed by using one glass plate as the glass body of the present invention, instead of laminated glass, and stacking the conductive film 2 on at least one of surfaces of the glass plate located on the vehicle outer side and surfaces of the glass plate located on the vehicle inner side. Also, it is possible to use glass having low transmittance, such as privacy glass, as the glass body used in a side glass or a rear glass. Also, the above-described various removal regions can be formed in the film region 20.

Examples

The following describes examples of the present invention. However, the present invention is not limited to the following examples.

A conductive film and removal regions were formed on a glass plate, and the relationship between the frequency and transmission attenuation (the amount of transmission attenuation) of radio waves was simulated below. Simulation conditions are as follows. (1) Glass plate: calculation was performed presuming that a conductive film was present in an air without considering glass at this time. Note that it is known that, in the case of a clear float glass plate, the line length of a removal region, which will be described below, is consistent to the results of the simulation by multiplying the line length used in the simulation by 0.64 (wavelength shortening ratio of glass) in consideration of the wavelength shortening ratio (relative permittivity) of glass. Also, it is known that this magnification is influenced by the composition of a glass plate, the thickness of a glass plate, and an intermediate film present in the windshield. In reality, the line length is adjusted as appropriate in consideration of these factors in a range of 0.6 to 0.7 times that in the simulation. That is, as described above, the length of a removal region or the like shown in the following examinations refers to the length thereof when a conductive film is disposed in an air, and thus, the length of a removal region or the like when a conductive film is disposed on a conductive film is obtained by multiplying each length described below by 0.64, which is the wavelength shortening ratio α of the glass plate. In addition, if the conductive film is disposed on a base member other than a single plate, each length described below need only be multiplied by the wavelength shortening ratio of the base member.

(2) Composition of conductive film (three layers are stacked) FL / $SnO_2$ (25 nm) / $SiO_2$ (25 nm) / $SnO_2$ : F (350 nm)
(3) Complex refractive index of each layer of conductive film (a value at a target wavelength, no wavelength dependence)
500 + 500i
(4) Simulation software
DiffractMOD (electromagnetic wave analysis solver by RCWA technique) was used as simulation software.
(5) Target wavelength range
100 mm to 1000 mm (frequency: 0.3 GHz to 3 GHz)

This takes into consideration that the wavelength unit of radio waves of mobile phones is in a range of 0.7 GHz to 2.4 GHz, including the possibility of future usage. The reasons for mainly considering the wavelengths of mobile phones are as follows. That is, there are various devices for receiving and transmitting radio waves for vehicles, and it is expected that many devices are to be used in the future. Also, an in-vehicle device can be fixedly installed to a fixed portion inside the vehicle, and the radio wave transmission performance, which is peculiar to a device, of only a given specific portion corresponding thereto needs to be improved, whereas passengers use mobile phones at various positions inside the vehicle, and thus the positions cannot be fixed. Thus, radio wave transmission performance needs to be ensured over the entire surrounding portions of the vehicle.

The amount of transmission attenuation was calculated using the above-described conductive film. The amount of transmission attenuation indicates how difficult it is for radio waves to pass through, and is calculated as follows.

$$\text{Amount of transmission attenuation (dB)} = 20 \times \log \text{(strength of transmitted electric field / strength of incident electric field)}$$

The radio wave transmission performance was examined using the amounts of transmission attenuation as evaluation values. That is, evaluation was made that the smaller the amount of transmission attenuation was, the higher the radio wave transmission performance was. Examples and comparative examples were prepared as follows, and the amount of transmission attenuation was evaluated.

(1) Mode 1

• Example 1

The above-described conductive film was formed on the entire surface of a glass plate, and a simulation was performed. The conductive film was a film having a typical surface resistance value of 13 Ω/□ as a film formed using the CVD method.

• Example 2

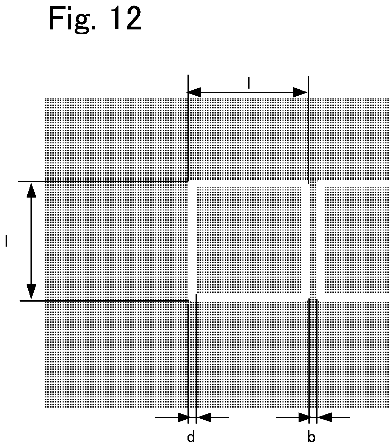

As shown in FIG. 12, multiple square first removal regions having one side length 1 of 50 mm were formed in the film region of Example 1. A width d of the first removal region was 0.1 mm, and a space b between adjacent first removal regions was 2 mm. Note that, although only three first removal regions are formed in FIG. 12 for convenience of description, a plurality of first removal regions were formed for the entire glass plate to be evaluated in the simulation. The same applies to Examples 3 to 40 below unless otherwise stated (e.g., Example 16), many removal regions were formed over the entirety of the glass plate, and a simulation was performed.

• Comparative Example

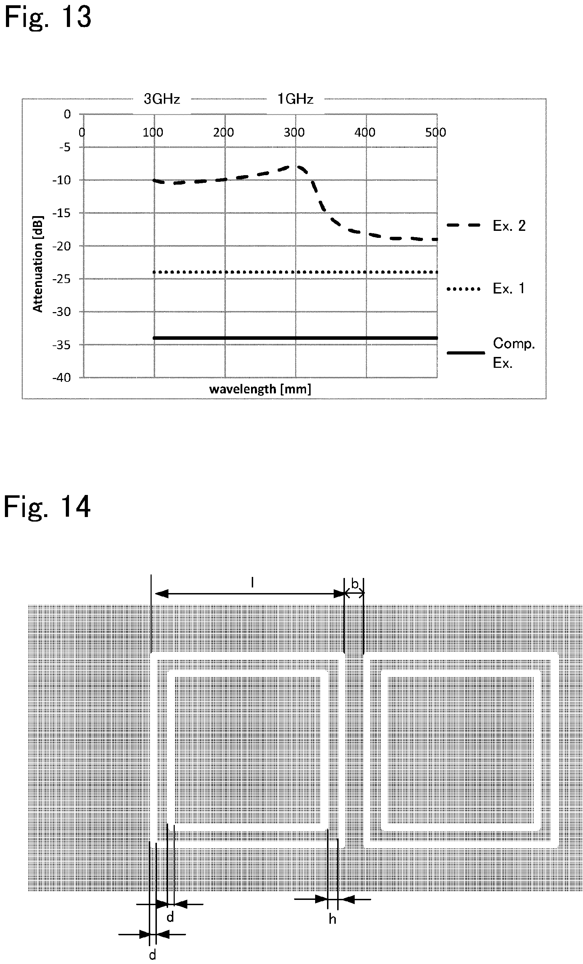

The above-described conductive film was formed on the entire surface of the glass plate, and a simulation was performed. The conductive film was a film having a typical surface resistance value of 4 Ω/□ as a sputtering film.
The results of the simulation of the amount of transmission attenuation are shown in FIG. 13. As shown in FIG.

13, the comparative example of a sputtering film having a low surface resistance had an amount of transmission attenuation of -34 dB. When a mobile phone is used, radio waves cannot be detected when the amount of transmission attenuation is more than or equal to - 30 dB, and the area may be out of service. On the other hand, with Example 1, no removal region was formed, but the conductive film has an amount of transmission attenuation of -24 dB. In the case of a mobile phone, this value indicates the level at which radio waves are detected and the mobile phone can be used. However, vehicles do not always travel in a place with good radio wave conditions, and thus as with Example 2 in which the first removal region is formed, it is preferable that radio wave transmission performance is higher than that in Example 1.

(2) Mode 2

As shown in FIG. 14, a plurality of square first removal regions and square second removal regions were formed in a film region. In the following, it is presumed that one side of a first removal region (the distance from a line-end of the removal region to the other line-end) is 1 (mm), a line width of the first removal region and a line width of a second removal region are each d (mm), the distance between the first removal region and the second removal region (the distance from a line inner end of the first removal region to a line outer end of the second removal region) is h (mm), and the distance between adjacent first removal regions (the distance from the line-end of the removal region to the line-end of the adjacent removal region) is b (mm).

Also, in Examples 3 to 5, a window glass having removal regions as that shown in FIG. 14 was adopted, and d was set to 0.1 mm, b was set to 2 mm, and h was set to 1 mm, and as will be described below, the radio wave transmission performance was calculated by changing l.

- Example 3: 1 = 37.5 mm
- Example 4: 1 = 50 mm
- Example 5: 1 = 75 mm

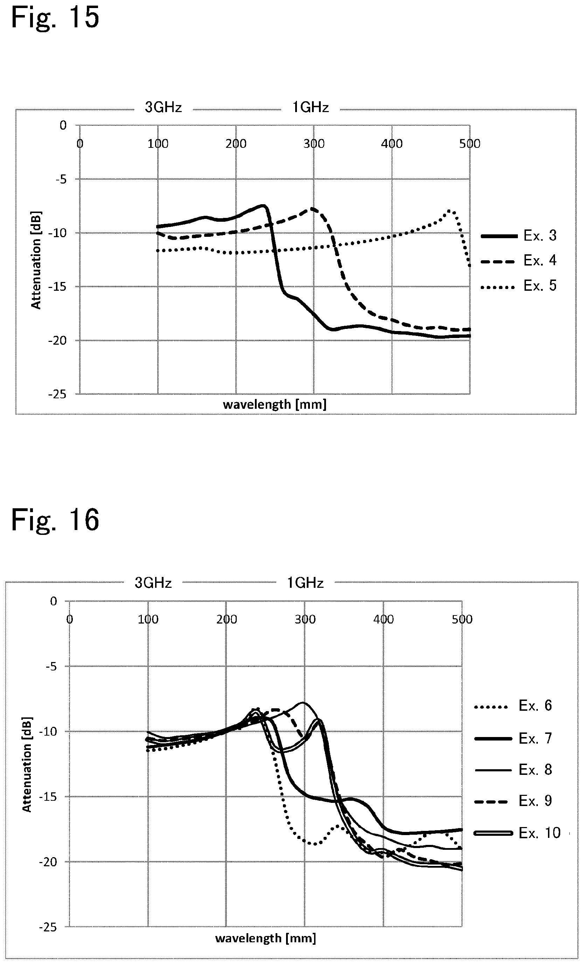

The results are shown in FIG. 15. As shown in FIG. 15, as the length of one side of the first removal region increased, constant transmission performance was achieved up to the more longer wavelength side. That is, as the length of one side of the first removal region increased, the radio wave transmission performance was improved on the longer wavelength side. Usually, if the amount of transmission attenuation is less than or equal to -10 dB, a blocking effect is unlikely to be obtained, and thus, Example 4 is most preferable in which the amount of transmission attenuation is less than or equal to - 10 dB in a wavelength range of mobile phones (300 mm or less). Also, Example 5 is preferable because the amount of transmission attenuation is high over a wide wavelength range, even though the amount of transmission attenuation in the wavelength range of the mobile phone is slightly inferior to that of Example 4. On the other hand, if the length of one side is shorter than that of Example 4, the amount of transmission attenuation increases in the longer wavelength range, and thus, Example 4 is more preferable from this point of view. It is conceivable that the reason why the amount of transmission attenuation of Example 3 had such a value is that the shorter the length of one side is, the further the peak performance shifts to the shorter wavelength side.

From the results shown in FIG. 15, in particular, Examples 4 and 5 are preferable because the amount of transmission attenuation increases in a frequency range of 1 GHz or higher, which is the frequency range of the mobile phones. Although 1 = 50 mm and 1 = 75 mm hold true respectively in Examples 4 and 5, if the film region is disposed on a glass plate, a numerical value obtained by multiplying these values by the wavelength shortening ratio $\alpha$ (=0.64) of the glass plate, that is, $50 \times \alpha$ (mm) and $75 \times \alpha$ (mm) each represent the length of one side. Thus, the length of one side of the first removal region effective in the frequency range of mobile phones is preferably more than or equal to $50 \times \alpha$ (mm). Also, because the first removal region has a square shape, the length L1 of the total length of the first removal region is preferably more than or equal to $200 \times \alpha$ (mm). Note that, even if the first removal region has a rectangular shape instead of a square shape, similarly, the length L1 of the total length is preferably more than or equal to $200 \times \alpha$ (mm).

In Examples 6 to 10, d was set to 0.1 mm, b was set to 2 mm, and 1 was set to 50 mm in the removal region pattern shown in FIG. 14, and as will be described below, radio wave transmission performance was calculated by changing h.

- Example 6: h = 0.1 mm
- Example 7: h = 0.5 mm
- Example 8: h = 1 mm
- Example 9: h = 3 mm
- Example 10: h = 5 mm

The results are shown in FIG. 16. As shown in FIG. 16, with Examples 6 and 7, a region was present in which radio wave transmission performance was locally low in the wavelength range of mobile phones. That is, the narrower the space between the first removal region and the second removal region was, the lower the radio wave transmission performance was. The amount of transmission attenuation in the other Examples 8 to 10 was substantially about -10 dB. Thus, the space between the first removal region and second removal region is preferably more than or equal to 1 mm. It is conceivable that this is because, if removal regions are excessively close to each other, these removal regions are substantially the same as one removal region being provided.

In Examples 11 to 16, d was set to 0.1 mm, h was set to 1 mm, and 1 was set to 50 mm in the window glass shown in FIG. 14, and as will be described below, radio wave transmission performance was calculated by changing b.

- Example 11: b = 0.1 mm
- Example 12: b = 0.5 mm
- Example 13: b = 2 mm
- Example 14: b = 5 mm
- Example 15: b = 10 mm
- Example 16: b = 50 mm

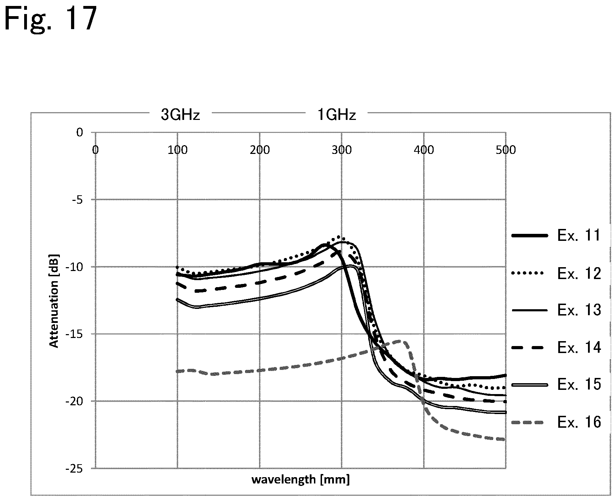

The results are shown in FIG. 17. As shown in FIG. 17 and Examples 11 to 16, the larger the space between adjacent first removal regions was, the lower the radio wave transmission performance was. Thus, it was found that removal regions need only be installed at a space of 0.1 mm or more, preferably 0.5 mm or more, and preferably 10 mm or less. It is conceivable that this is because, if removal regions are excessively close to each other, only substantially the same performance as if only one removal region is present is obtained, whereas, if removal regions are excessively distant from each other, the mutual effects between removal regions will be lost, and only the same performance as if removal regions are present substantially alone is obtained.

In Examples 17 to 23, b was set to 2 mm, 1 was set to 50 mm, and h was set to 1 mm in the window glass shown in FIG. 14, and as will be described below, radio wave transmission performance was calculated by changing d.

- Example 17: d = 0.01 mm
- Example 18: d = 0.02 mm
- Example 19: d = 0.03 mm
- Example 20: d = 0.04 mm
- Example 21: d = 0.05 mm
- Example 22: d = 0.1 mm
- Example 23: d = 1 mm

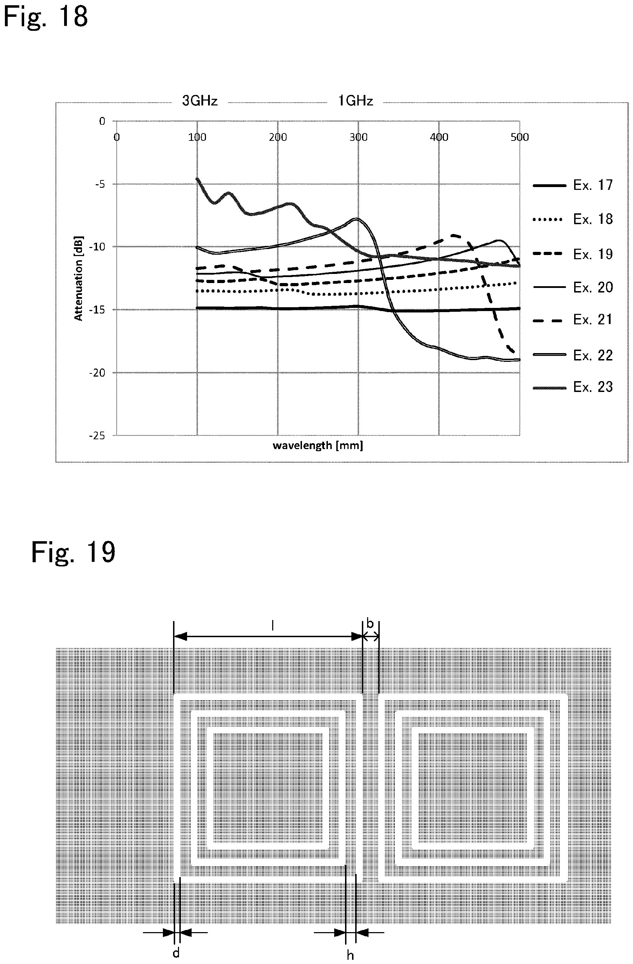

The results are shown in FIG. 18. As shown in FIG. 18, it was found that the wider the line width of the removal region is, the higher the radio wave transmission performance is. Also, it was found that the wider the line width of the removal region is, the higher the radio wave transmission performance is on the higher frequency side. Thus, the width of a removal region is preferably more than or equal to 0.05 mm in consideration of transmission performance in a wavelength region used by mobile phones. Note that, although a line width of 1 mm or more is acceptable in terms of the amount of transmission attenuation, it is not preferable because lines of the removal region are likely to be visible.

(3) Mode 3

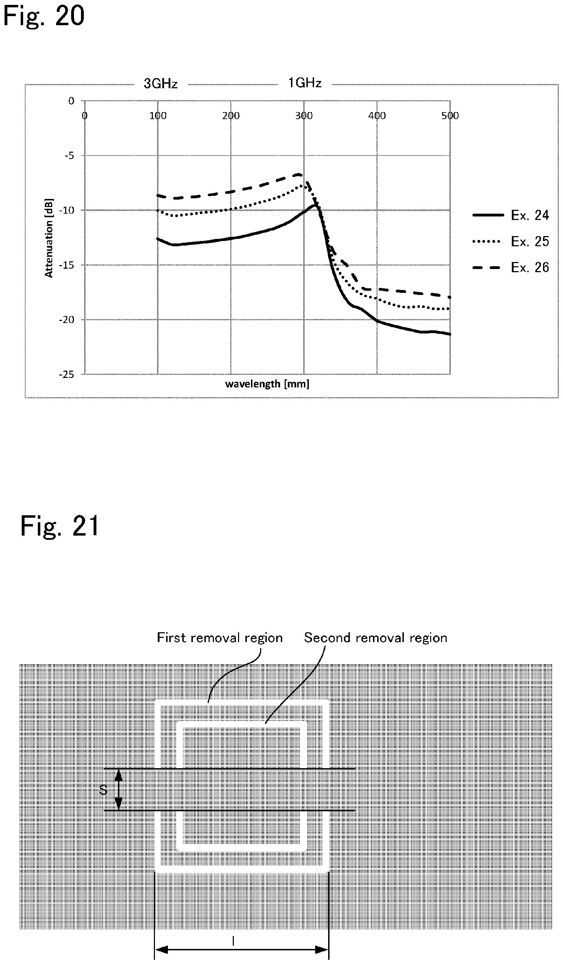

As shown in FIG. 19, as Example 24, a plurality of concentric square first removal regions, second removal regions, and third removal regions were formed in a film region. In the following, one side 1 of the first removal region was set to 50 (mm), the line width d of each removal region was set to 0.1 (mm), the distance h between the first and second removal regions and the distance h between the second and third removal regions were each set to 1 (mm), and the distance b between adjacent first removal regions was set to 2 (mm). Also, under the same conditions, only the first removal region was formed in Example 25, and the first and second removal regions were formed in Example 26, and these examples were examined together. The results are shown in FIG. 20. As shown in FIG. 20, it was found that the higher the number of concentric removal regions is, the further the radio wave transmission performance is improved.

(4) Mode 4

The removal regions shown in FIG. 21 were produced. This mode is the same as that shown in FIG. 9 in the above-described embodiment. The reasons for providing open regions in this manner are based on the viewpoint of visibility. As described above, it is known that, in the case of vehicle glass, from the relationship between the movement of the line of sight of a passenger and the glass angle, usually, in a case where there is a difference in transmitted light in the horizontal direction with respect to a vehicle (horizontal stripes), this difference is more visible than in a case where there is a difference in transmitted light in the vertical direction with respect to the vehicle (vertical stripes). Thus, it is desired to reduce horizontal stripes as much as possible for the removal regions.

The space h between removal regions was set to 1 mm, one side 1 of the first removal region was set to 50 mm, the line width d of the removal region was set to 0.1 mm, and radio wave transmission performance was calculated by changing a length S of right and left open portions (Examples 27 to 30).

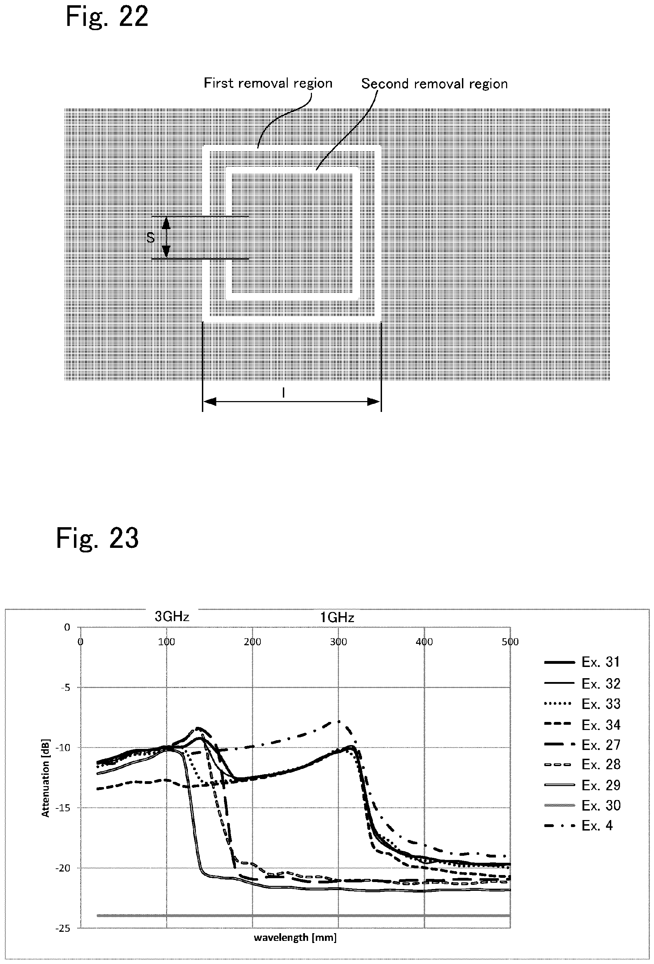

Also, as shown in FIG. 22, a mode in which one open portion was formed was also evaluated (Examples 31 to 34). Furthermore, comparison with Example 4 was also performed for reference.

- • Example 27: S = 0.1 mm
- • Example 28: S = 1 mm
- • Example 29: S = 10 mm
- • Example 30: S = 47.5 mm
- • Example 31: S = 0.1 mm
- • Example 32: S = 1 mm
- • Example 33: S = 10 mm
- • Example 34: S = 47.5 mm

The results are shown in FIG. 23. As shown in FIG. 23, it was found that, when comparing Examples 27 to 30 with Examples 31 to 34, the transmission performance of Examples 27 to 30 each having two open portions further shifted to the shorter wavelength side, and transmission performance thereof was higher on the shorter wavelength side, than with Examples 31 to 34. From these results, it is preferable that one open portion is preferable that two open portions in wavelength of 100 to 300 mm, which is the wavelength range of mobile phones.

Also, it was found that the longer the length S of an open portion is, the lower the transmission performance was, and when comparing the combinations of the examples having the same number of open portions, radio wave transmission performance did not change significantly regardless of the open portion having a length S of 0.1 mm, or 47.5 mm. In particular, it was found that the transmission performance of Examples 31 to 34 having one open portion was reduced to the extent that there was no practical effect, even when compared with Example 4 having no open portion.

(5) Mode 5

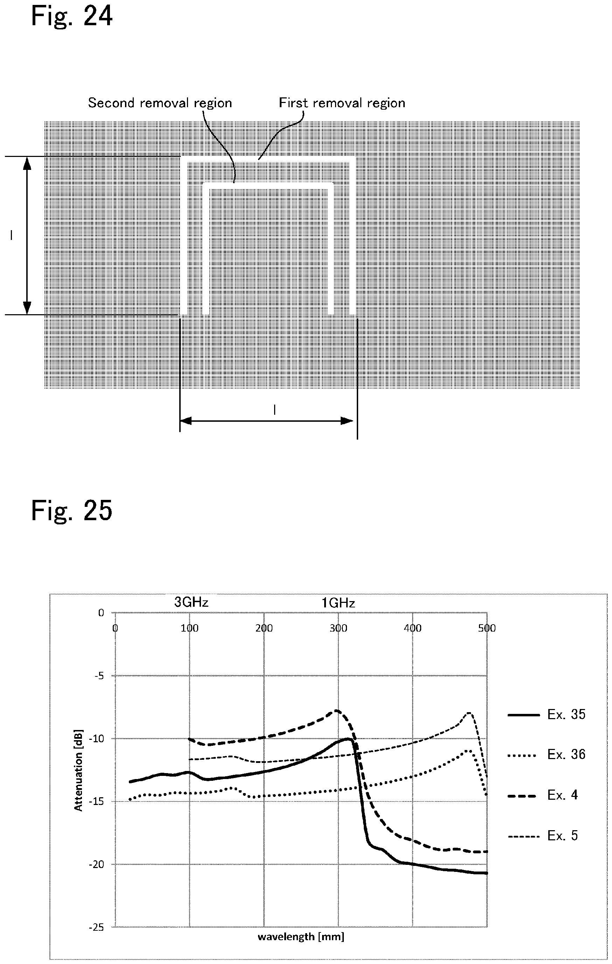

The removal regions shown in FIG. 24 were further produced by examining the results obtained in Mode 4. This mode is the same as that shown in FIG. 10 in the above-described embodiments. The space h between removal regions was set to 1 mm, and the line width d of the removal region was set to 0.1 mm, and radio wave transmission performance was calculated by changing the length 1 of one side as will be described later. Furthermore, comparison with Examples 4 and 5 was also performed for reference.

- • Example 35: 1 = 50 mm
- • Example 36: 1 = 75 mm

The results are shown in FIG. 25. It was confirmed that, as with Examples 35 and 36, when a U-shape is formed with one lower side of a removal region as a completely open region, transmission performance is only reduced to a matter of degree practically, compared to a case where no open region is provided. As described above, if open portions are provided in removal regions, open portions can be provided up to 25% of the total length of a line, and are preferably provided with priority to the horizontal direction with respect to the vehicle.

The above describes the results of the simulation focusing on the radio wave wavelength range of mobile phones. As described above, there are various devices that are to be actually installed in a vehicle and that transmit and receive radio waves, and diverse wavelength ranges are also used. Needless to say, originally, it is preferable to allow the transmission of radio waves with a wider wavelength range. It is possible to handle the above by combinations of a plurality of removal regions as an example. This respect was examined in Mode 6 below.

(6) Mode 6

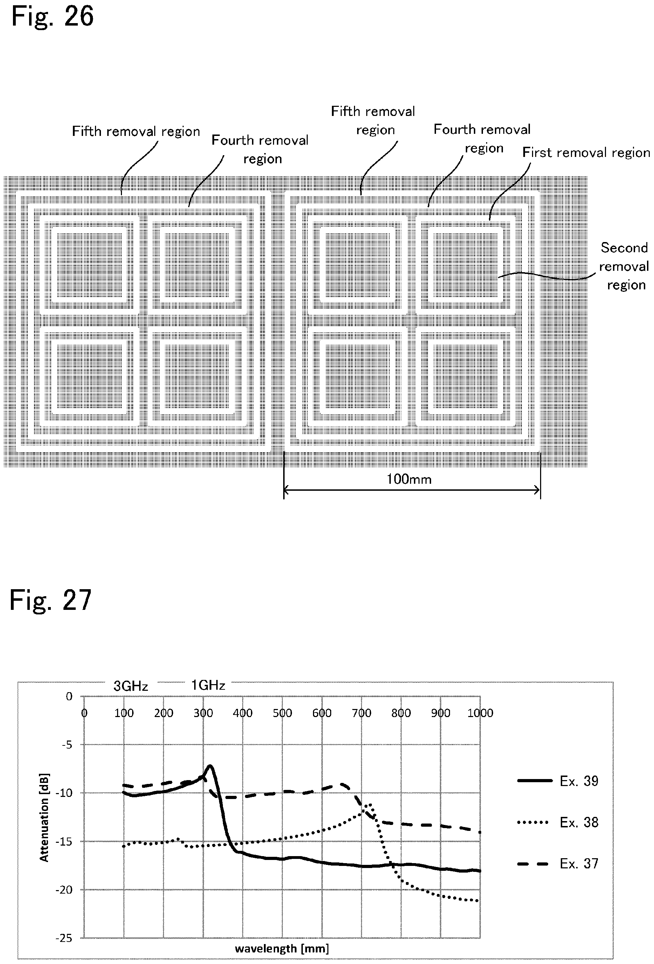

FIG. 26 is an example. As shown in FIG. 26, the first removal region and the second removal region were regarded as one unit shape, and a plurality of square fourth removal regions respectively surrounding four unit shapes, and a plurality of square fifth removal regions respectively surrounding the fourth removal regions were formed. The space h between regions was set to 1 mm, the space b between the fifth removal regions was set to 2 mm, one side of the first removal region was set to 50 mm, and one side of the fifth removal region was set to 100 mm.

Here, the radio wave transmission performance of Examples 37, 38, and 39 was calculated using the mode shown in FIG. 26 as Example 37, a mode as Example 38 in which no first and second removal regions were present and only the fourth and fifth removal regions were provided, and a mode as Example 39 in which only the first and second removal regions were provided. The results are shown in FIG. 27. With Example 39 in which only the first and second removal regions were provided, the amount of transmission attenuation was increased particularly on the longer wavelength side than the wavelength range of mobile phones, and the transmission performance decreased. On the other hand, with Example 38 in which only the fourth and fifth removal regions were provided, the amount of transmission attenuation decreased on the longer wavelength side than the wavelength region of mobile phones, and radio wave transmission properties were improved. It can be seen that Example 37 exhibited transmission performance close to the sum of the transmission performances of these two examples, and the radio wave transmission performance was improved in a wider wavelength range. In this manner, by adjusting combinations and sizes of removal regions and open portions, it is possible to make designs allowing the transmission of radio waves with a target wavelength range.

List of Reference Numerals

| 1 | Laminated glass |
| 2 | Conductive film |
| 20 | Film region |
| 21 | First removal region |
| 22 | Second removal region |
| 23 | Third removal region |
| 24 | Fourth removal region |

**Claims**

1. A vehicle window glass comprising:

   a glass body having at least one glass plate; and
   a film region that is stacked on a surface of the at least one glass plate, and is formed by a conductive film having a surface resistance value of 11 to 15 $\Omega/\square$.

2. The vehicle window glass according to claim 1,
   wherein the film region is provided with at least one first removal region that is formed by a closed line and where the conductive film is not stacked.

3. The vehicle window glass according to claim 2,
   wherein, when a wavelength shortening ratio of the glass plate is $\alpha$, the first removal region has a rectangular shape having one side of $50 \times \alpha$ (mm) or more.

4. The vehicle window glass according to claim 3,
   wherein, when a length of the entire circumference of the first removal region is L1 (mm), $L1 \geq 200 \times \alpha$ is satisfied.

5. The vehicle window glass according to claim 1,
   wherein the film region is provided with at least one first removal region that is formed by a discontinuous line having at least one open portion and where the conductive film is not stacked.

6. The vehicle window glass according to any of claims 2 to 5,
   wherein a second removal region where the conductive film is not stacked along the first removal region is formed on an inner side of the first removal region, and
   a region formed by the conductive film is formed between the first removal region and the second removal region.

7. The vehicle window glass according to claim 6,
   wherein a third removal region where the conductive film is not stacked along the second removal region is formed on an inner side of the second removal region, and
   a region formed by the conductive film is formed between the second removal region and the third removal region.

**8.** The vehicle window glass according to claim 7,
wherein, when, in any two of the first to third removal regions, a length of the removal region having a longer total length is L2 and a length of the removal region having a shorter total length is L3, $L2 \geq 1.5 \times L3$ is satisfied.

**9.** The vehicle window glass according to any of claims 2 to 8,
wherein at least one fourth removal region where the conductive film is not stacked is formed on an outer side of a plurality of the first removal regions, the at least one fourth removal region being formed by a closed line disposed to surround the plurality of first removal regions.

**10.** The vehicle window glass according to any of claims 1 to 9,
wherein the conductive film is formed using a CVD method.

**11.** The vehicle window glass according to any of claims 1 to 10,
wherein the conductive film is a conductive film that meets all of the required qualities of Class A and Class B in all items of light resistance, abrasion resistance, acid resistance, and alkali resistance specified in JIS R3221: 2002.

**12.** The vehicle window glass according to any of claims 1 to 11,
wherein the conductive film is stacked on a surface of the glass body on a vehicle inner side.

**13.** The vehicle window glass according to any of claims 1 to 11,
wherein the glass body includes:

an outer glass plate,
an inner glass plate, and
an intermediate film disposed between the outer glass plate and the inner glass plate, and
the conductive film is stacked on at least one of a surface of the outer glass plate on a vehicle inner side and a surface of the inner glass plate on a vehicle outer side.

**14.** The vehicle window glass according to claim 13,
wherein the conductive film is stacked on both the surface of the outer glass plate on the vehicle inner side and the surface of the inner glass plate on the vehicle outer side.

**15.** The vehicle window glass according to any of claims 2 to 14,
wherein the vehicle window glass allows the transmission of radio waves having a frequency of X ($X \geq 0.7 \times 10^9$ Hz) by -24 dB or more.

**16.** The vehicle window glass according to claim 15,
wherein, when a wavelength shortening ratio of the glass plate is $\alpha$, the speed of light is c (mm/s), and a length of the entire circumference of the first removal region is L1 (mm), $L1 \geq \lambda \times \alpha$ (where $\lambda$ (mm) = c/X) is satisfied.

**17.** The vehicle window glass according to claim 16,
wherein the first removal region has a rectangular shape and is formed by a discontinuous line having at least one open portion, and
the open portion has a length of $\lambda \times \alpha$ or more.

**18.** A method for manufacturing a vehicle window glass, the method comprising:

a step of stacking, on a surface of a glass plate, a film region formed by a conductive film having a surface resistance value of 11 to 15 $\Omega/\square$ in a float method that is used to manufacture the glass plate; and
a step of forming at least one removal region where the conductive film has been removed from a portion of the film region.

**19.** The method for manufacturing a vehicle window glass according to claim 18,
wherein the film region is formed on a surface of the glass plate that faces a vehicle inner side.

**20.** The method for manufacturing a vehicle window glass according to claim 18, the method further comprising a step of forming a laminated glass in which an intermediate film is disposed between an outer glass plate and an inner glass plate,

wherein at least one of the outer glass plate and the inner glass plate is a glass plate on which the film region is stacked.

21. The method for manufacturing a vehicle window glass according to claim 20,
wherein the inner glass plate is a glass plate on which the film region is stacked, and the film region is stacked on a surface of the inner glass plate on a vehicle inner side.

22. The method for manufacturing a vehicle window glass according to claim 20,
wherein the outer glass plate and the inner glass plate are each a glass plate on which the film region is stacked, and the film region is stacked on a surface of the outer glass plate on a vehicle inner side and a surface of the inner glass plate on the vehicle inner side.

23. The method for manufacturing a vehicle window glass according to any of claims 18 to 22,
wherein the removal region is constituted by a closed line.

24. The method for manufacturing a vehicle window glass according to any of claims 18 to 22,
wherein the removal region is constituted by a discontinuous line having at least one open portion.

25. The method for manufacturing a vehicle window glass according to any of claims 18 to 24,
wherein, in the step of forming the removal region, the conductive film is removed through irradiation with a laser.

26. The method for manufacturing a vehicle window glass according to claim 25,
wherein the laser is selected from an infrared laser, a green laser, and an ultraviolet laser.

27. The method for manufacturing a vehicle window glass according to claim 25,
wherein the laser is an infrared laser.

## Fig. 1

## Fig. 2

Fig. 3

Fig. 4

Fig. 5

Fig. 6

Fig. 7

Fig. 8

Fig. 9

Fig. 10

Fig. 11A

Fig. 11B

Fig. 11C

Fig. 11D

# Fig. 12

Fig. 13

Fig. 14

## Fig. 15

## Fig. 16

Fig. 17

Fig. 18

Fig. 19

Fig. 20

Fig. 21

Fig. 22

First removal region    Second removal region

Fig. 23

Fig. 24

Second removal region    First removal region

Fig. 25

## Fig. 26

## Fig. 27

## INTERNATIONAL SEARCH REPORT

International application No.

PCT/JP2019/012632

### A. CLASSIFICATION OF SUBJECT MATTER
Int. Cl. B60J1/00(2006.01)i, B32B17/00(2006.01)i

According to International Patent Classification (IPC) or to both national classification and IPC

### B. FIELDS SEARCHED

Minimum documentation searched (classification system followed by classification symbols)
Int. Cl. B60J1/00, B32B17/00

Documentation searched other than minimum documentation to the extent that such documents are included in the fields searched
Published examined utility model applications of Japan      1922-1996
Published unexamined utility model applications of Japan    1971-2019
Registered utility model specifications of Japan            1996-2019
Published registered utility model applications of Japan    1994-2019

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| Y | JP 2016-506308 A (SAINT-GOBAIN GLASS FRANCE) 03 March 2016, paragraphs [0001]-[0112], fig. 1-22 & US 2015/0343884 A1, paragraphs [0001]-[0141], fig. 1-22 & WO 2014/060203 A1 & EP 3081378 A1 & CA 2887333 A1, pages 1-29, fig. 1-22 & CN 104703794 A & KR 10-2015-0054985 A & KR 10-2018-0014875 A | 1-27 |
| Y | JP 2007-112710 A (NIPPON SHEET GLASS CO., LTD.) 10 May 2007, paragraphs [0072]-[0085], [0109]-[0120], [0148], fig. 1 & US 6461736 B1, columns 6-29, fig. 1 & EP 1116699 A1, paragraphs [0022]-[0209], fig. 1 | 1-27 |

☒ Further documents are listed in the continuation of Box C.   ☐ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 04.06.2019 | 18.06.2019 |

| Name and mailing address of the ISA/ | Authorized officer |
|---|---|
| Japan Patent Office 3-4-3, Kasumigaseki, Chiyoda-ku, Tokyo 100-8915, Japan | |
| | Telephone No. |

Form PCT/ISA/210 (second sheet) (January 2015)

EP 3 778 275 A1

**INTERNATIONAL SEARCH REPORT**

International application No.

PCT/JP2019/012632

C (Continuation). DOCUMENTS CONSIDERED TO BE RELEVANT

| Category* | Citation of document, with indication, where appropriate, of the relevant passages | Relevant to claim No. |
|---|---|---|
| Y | JP 2008-037668 A (ASAHI GLASS CO., LTD.) 21 February 2008, paragraph [0014], fig. 2, 3 (Family: none) | 11-17, 20-27 |
| A | JP 2007-250430 A (SUMITOMO METAL MINING CO., LTD.) 27 September 2007, entire text, all drawings (Family: none) | 1-27 |

Form PCT/ISA/210 (continuation of second sheet) (January 2015)

**EP 3 778 275 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 6113291 B